Europäisches Patentamt

European Patent Office

Office européen des brevets

(19)

(11) Numéro de publication: **0 424 593 A1**

## (12) DEMANDE DE BREVET EUROPEEN

(21) Numéro de dépôt: 89810805.5

(22) Date de dépôt: 26.10.89

(51) Int. Cl.⁵: **F24F 13/02**, F16L 41/02

(43) Date de publication de la demande:
**02.05.91 Bulletin 91/18**

(84) Etats contractants désignés:
**AT BE CH DE ES FR GB GR IT LI LU NL SE**

(71) Demandeur: **DURUZ SA FABRIQUE
D'ARTICLES METALLIQUES
rte Petit-Moncor 14
CH-1752 Villars-sur-Glâne(CH)**

(72) Inventeur: **Anstett, André**

**Route de Bertigny 5
CH-1700 Fribourg(CH)
Inventeur: Duruz, Michel
Route de Planafaye 104
CH-1752 Villars-sur-Glâne(CH)**

(74) Mandataire: **Fischer, Franz Josef et al
BOVARD SA Ingénieurs-Conseils ACP
Optingenstrasse 16
CH-3000 Bern 25(CH)**

(54) Pièce de raccordement pour installation d'évacuation d'air vicié.

(57) La pièce de raccordement pour évacuation d'air vicié permet d'éviter la propagation d'odeurs et de sons entre plusieurs prises latérales (4,4') raccordées à la même pièce de raccordement, la chambre périphérique assurant l'évacuation de l'air vicié en provenance de ces prises est séparée en plusieurs parties isolées entre elles.

L'écran interne (2) est d'une longueur suffisante afin de ne pas permettre la propagation du feu ou de la fumée en cas d'incendie.

FIG. 1

# PIECE DE RACCORDEMENT POUR INSTALLATION D'EVACUATION D'AIR VICIE

L'invention consiste en une amélioration substantielle apportée à une pièce de raccordement pour installation d'évacuation d'air vicié connue par le brevet CH 661 338.

Il est courant de brancher sur un même canal de ventilation plusieurs prises d'air vicié qui, respectivement, servent à évacuer l'air de différents locaux tels que les cuisines, salles de bains, etc. Le transport d'air à vitesse relativement grande (environ 12 m/sec) à travers le canal d'évacuation est en général commandé par un ventilateur d'extraction unique qui dessert par exemple plusieurs salles de bains superposées, mais qui n'est pas toujours en fonctionnement. En particulier, lorsque ce ventilateur est arrêté, l'installation, selon l'art antérieur, présente l'inconvénient de l'effet "téléphone", c'est-à-dire de liaison phonique entre les prises d'air de chaque étage. Lorsque le ventilateur est en fonction, cette transmission phonique est quelque peu voilée par le bruit même de l'aspiration d'air, mais elle n'en demeure pas moins un inconvénient.

Par ailleurs, les installations connues présentent l'inconvénient de permettre des refoulements d'odeur ou de vapeur entre les différentes prises. Ce phénomène de refoulement se présente aussi d'une façon perturbante lorsque deux ou plusieurs hottes de ventilation de cuisine ayant un ventilateur de refoulement d'air vicié incorporé sont raccordées sur un même canal collecteur (qui peut alors se passer de ventilateur). Dans ce cas interviennent les refoulements d'odeurs ou de vapeurs au travers des raccordements des hottes voisines dont le ventilateur particulier ne fonctionne pas.

Une solution à ce problème avait déjà été apportée par le dispositif décrit dans le brevet susmentionné; la séparation du flux d'air extrait d'un local, du flux extrait de locaux ayant des prises situées en amont sur la conduite commune, le mélange de ces différents flux ne se faisant qu'en aval de la prise d'air dudit local a déjà permis de diminuer sensiblement les interférences phoniques et propagations d'odeurs entre locaux.

Néanmoins, ce dispositif n'est pas absolument satisfaisant pour des locaux branchés sur la même pièce de raccordement. Dans le cas particulier où des hottes de ventilation de cuisine, chacune comportant son propre ventilateur d'extraction, sont reliées à une pièce de raccordement commune, il se peut, lorsqu'un seul ventilateur est en fonction, que des odeurs ou des vapeurs soient injectées dans la cuisine dont la hotte de ventilation est arrêtée, ce qui est absolument contraire au but recherché.

L'invention se propose de supprimer totalement ce défaut en prévoyant des parois situées entre l'écran intérieur et la paroi extérieure, dans la chambre périphérique commune, afin de créer des chambres, chacune d'entre elles étant reliée à une conduite d'extraction et étant séparée des autres, le mélange des flux d'air extraits se faisant, comme avec le flux principal, en aval de la prise d'air. De cette manière, les locaux branchés sur la même pièce de raccordement sont nettement séparés, aucune transmission d'odeur ou de vapeur ne pouvant se faire de l'un à l'autre.

Un autre problème relatif à ce type de canalisations concerne la transmission du feu et de la fumée en cas d'incendie dans l'un ou plusieurs des locaux desservis par une telle conduite d'extraction d'air vicié. Afin de remédier à ceci, l'Association des Etablissements cantonaux d'Assurance contre l'Incendie a établi des "Directives pour les prescriptions sur la police du feu" (Prescriptions de prévention incendie) consacrées aux "Installations de ventilation et de climatisation", dont l'édition 1983 comporte un art. 10.2.3 ayant la teneur suivante: "Maisons abritant plusieurs familles (raccordements multiples). Le ventilateur d'aspiration ou de pulsion doit être installé dans un local F90. Chaque tuyau doit pénétrer de 60 cm au moins dans le canal collecteur dans le sens du flux. Les canaux horizontaux situés à l'extérieur de l'habitation doivent être de construction F30 au minimum."

Cette prescription fait autorité en Suisse et cette valeur est actuellement valable pour tous les cantons suisses.

Un autre but de l'invention est donc de proposer une pièce de raccordement pour installation d'évacuation d'air vicié ne transmettant ni le feu ni la fumée en cas d'incendie dans un ou plusieurs des locaux raccordés à la conduite commune et acceptée par les prescriptions sur le sujet.

Il est en particulier évident que si la prescription mentionnée plus haut change et prescrit en particulier une longueur différente de celle de 60 cm comme admis actuellement, que s'il est fait mention d'une autre prescription, suisse ou étrangère, mentionnant une longueur différente de celle de 60 cm, la protection offerte par le présent brevet ne peut en être diminuée, la longueur de la pièce en question étant directement adaptée à cette nouvelle prescription par le fabricant.

Le dessin annexé illustre à titre d'exemple trois formes d'exécution de l'invention. Dans ce dessin,

la fig.1 est une vue schématique en coupe d'une pièce de raccordement en croix pour deux prises latérales,

la fig.2 est une vue en plan de la même pièce de raccordement en croix,

la fig.3 est une vue en coupe d'une pièce de raccordement pour une seule prise latérale, et

la fig.4 est une vue en coupe d'une pièce de raccordement pour deux prises latérales superposées.

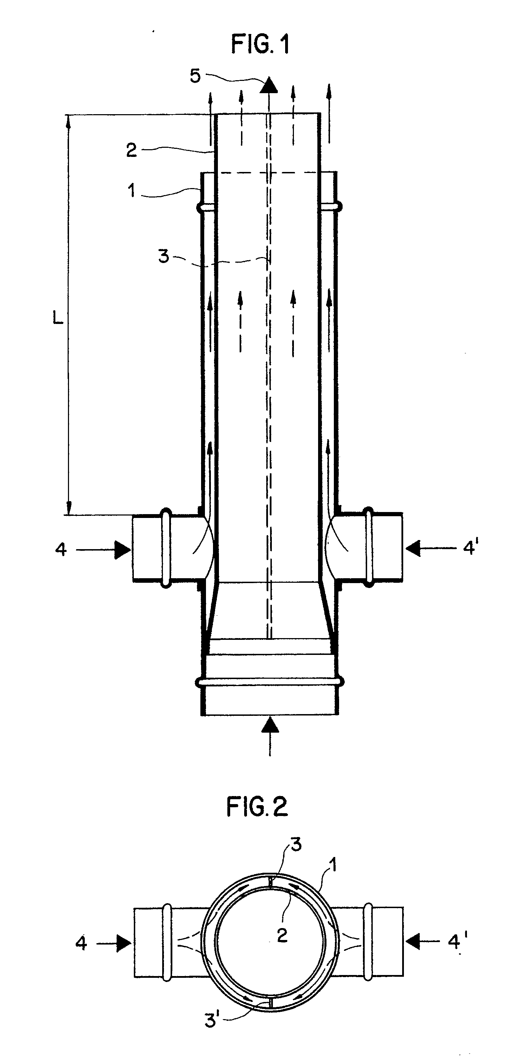

On remarque très bien sur les fig. 1 et 2 les deux éléments qui sont objets de l'invention; la paroi extérieure 1 et l'écran intérieur 2 délimitent une chambre périphérique située entre ces éléments, cette chambre périphérique étant séparée en deux chambres, isolées par les parois 3 et 3' s'étendant tout au long de l'écran intérieur, afin d'éviter le mélange immédiat des flux d'air extraits des canalisations 4 et 4', ce mélange ne se faisant qu'en 5, en aval de la prise d'air, au moment où lesdits flux se mélangent au flux principal; de plus, l'écran intérieur a une longueur L suffisante pour éviter la propagation du feu et de la fumée entre les différentes prises d'air.

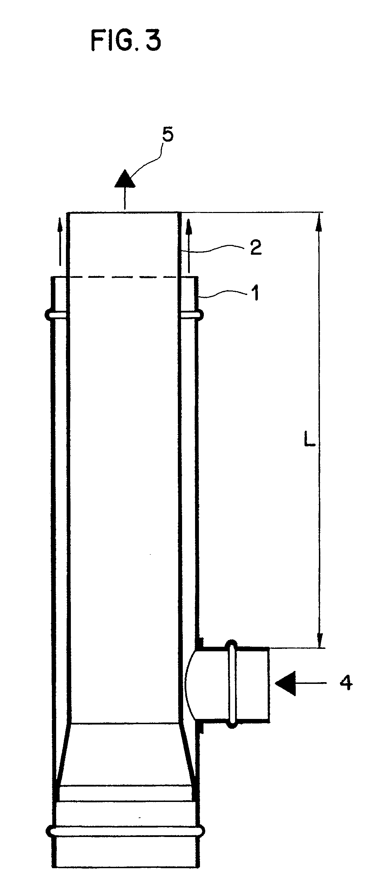

La fig. 3 montre une pièce de raccordement prévue pour une seule prise latérale 4, il n'est donc pas nécessaire d'y adjoindre les parois de séparation prévues dans la représentation précédente; par contre, cette prise d'air comporte aussi un écran intérieur 2 de longueur suffisante afin d'empêcher la propagation du feu et de la fumée.

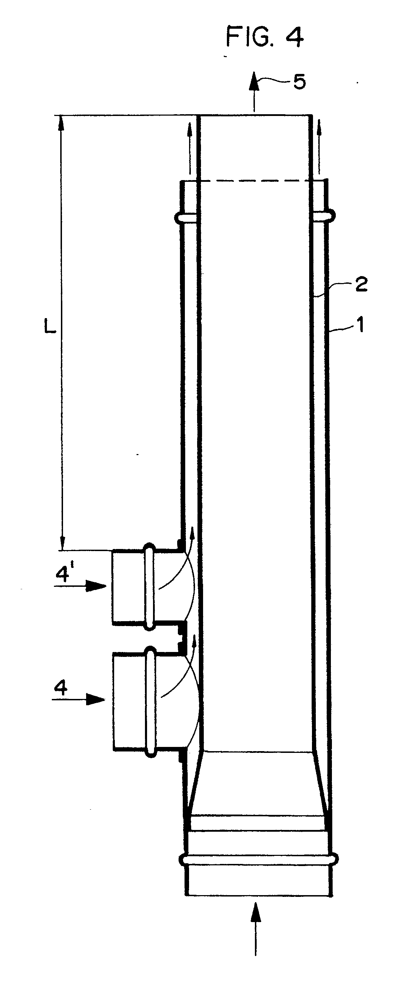

La fig. 4 montre une pièce de raccordement selon une autre forme d'exécution, c'est-à-dire ayant les prises latérales 4 et 4' venant se raccorder de manière décalée le long de l'axe longitudinal de la dite pièce de raccordement. Dans ce cas, la longueur L est mesurée à partir de la prise latérale située le plus en aval sur la pièce de raccordement. La figure 4 représente une pièce de raccordement avec deux prises latérales situées du même côté; dans ce cas, il n'est pas possible de séparer les flux en provenance de ces deux prises. De même, la pièce de raccordement peut comporter plus de deux prises latérales. Les prises latérales peuvent aussi être disposées différemment soit par exemple à 90° ou 180° les unes des autres, tout en étant décalées le long de l'axe longitudinal de la pièce de raccordement; dans ce cas, il est à nouveau possible de prévoir d'isoler les flux en provenance des diverses canalisations selon le système vu précédemment.

Ainsi donc, par l'ajout de parois de séparation faites de même matière ou d'une matière différente de celle de la pièce de raccordement, on obtient une séparation complète des prises transversales, évitant ainsi la propagation d'odeurs et de vapeur de l'une à l'autre de ces prises transversales; de plus, l'écran intérieur étant de longueur suffisante, il permet d'éviter la propagation du feu et de la fumée en cas d'incendie dans un ou plusieurs locaux reliés à la conduite commune d'évacuation d'air vicié, ladite longueur étant fixée par une prescription émanant d'un organisme officiel de lutte contre l'incendie.

Ce dispositif représenté ici pour une pièce de raccordement comprenant deux prises transversales peut évidemment être prévu pour une pièce de raccordement comprenant plus de deux prises transversales; la chambre périphérique sera alors séparée en un nombre de chambres correspondant au nombre de prises transversales par les mêmes moyens que ceux indiqués plus haut. De même, la section transversale du conduit a été représentée ici comme circulaire; toute autre forme de canal, par exemple une forme carrée ou rectangulaire, peut s'accommoder des caractères de la présente invention; plus particulièrement, l'ensemble des modes de réalisation et des variantes décrits dans le descriptif et les revendications du brevet CH 661 338 font partie du présent brevet.

## Revendications

1. Pièce de raccordement pour installation d'évacuation d'air vicié, à disposer sur un canal d'évacuation pour y brancher au moins un conduit d'aspiration de l'air d'un local, comprenant une paroi extérieure (1) adaptée pour être intégrée au canal et munie d'au moins une prise tubulaires de raccordement latéral (4,4'), et comprenant un écran interne (2) statique disposé à l'intérieur de la paroi externe sur un tronçon comprenant les dites prises latérales, cet écran étant jointif à la paroi extérieure en amont de la prise latérale située le plus en amont et non jointif à cette paroi en aval des prises, de façon à former une chambre périphérique où débouchent les dites prises latérales, et une zone centrale de transport axial d'air, l'écran interne empêchant une liaison phonique directe entre plusieurs prises branchées sur le canal, et assurant un effet antirefoulement, caractérisée en ce que la longueur de l'écran interne en aval de la prise latérale située le plus en aval est suffisante afin d'éviter la propagation du feu ou de la fumée en cas d'incendie, cette longueur étant prescrite par un organisme officiel de lutte contre l'incendie.

2. Pièce de raccordement pour installation d'évacuation d'air vicié selon la revendication 1, caractérisée en ce que, lorsque ladite pièce de raccordement comprend plusieurs prises de raccordement latéral, ladite chambre périphérique est séparée en plusieurs chambres, chacune étant de volume environ égal, chacune étant isolée des autres et correspondant à un raccordement latéral.

3. Pièce de raccordement pour installation d'évacuation d'air vicié selon la revendication 2, caractérisée en ce que les séparations entre les chambres, dans la chambre périphérique, sont faites d'éléments (3) situés chacun dans un plan contenant l'axe longitudinal de la pièce de raccordement, et fixés d'un côté sur la face intérieure de la paroi externe et de l'autre côté sur la face extérieure de l'écran interne, tout au long dudit écran.

## FIG. 1

## FIG. 2

FIG. 3

FIG. 4

Office européen
des brevets

# RAPPORT DE RECHERCHE EUROPEENNE

Numero de la demande

EP    89 81 0805

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | CH-A-661338 (DURUZ S.A.) <br> * le document en entier * <br> --- | 1-3 | F24F13/02 <br> F16L41/02 |
| Y | DE-A-3045860 (CILLICHEMIE ERNST VOGELMANN GMBH & CO) <br> * figures 2, 3 * <br> --- | 1-3 | |
| A | GB-A-2177190 (LAND SECURITIES (MANAGEMENT) LTD) <br> * figures * <br> --- | 1 | |
| A | DE-A-1922943 (WAKOFIC BAUTECHNIK GMBH & CO KG) <br> * figures * <br> --- | 1 | |
| A | EP-A-146134 (HITACHI LTD) <br> * figures * | 1 | |

**DOMAINES TECHNIQUES RECHERCHES (Int. Cl.5)**

F16L
F24F

Le présent rapport a été établi pour toutes les revendications

| Lieu de la recherche | Date d'achèvement de la recherche | Examinateur |
|---|---|---|
| LA HAYE | 28 JUIN 1990 | BARTSCH A.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)